# EUROPÄISCHE PATENTSCHRIFT

(11) **EP 3 717 564 B1**
(45) Veröffentlichungstag und Bekanntmachung des Hinweises auf die Patenterteilung: **20.03.2024**
(21) Anmeldenummer: 18804642.9
(22) Anmeldetag: 26.11.2018
(51) Int. Cl.: C08L 51/00, C08K 3/013, C08J 3/22, C09D 127/06, C08K 5/00

(54) **FARBMASTERBATCH AUF BASIS VON VINYLCHLORID-PFROPFCOPOLYMERISATEN**
COLOUR MASTER BATCH BASED ON VINYL CHLORIDE PFROPF COPOLYMERS
MÉLANGE MAÎTRE DE COULEUR À BASE DE COPOLYMÈRES GREFFÉS DU CHLORURE DE VINYLE

(30) Priorität: 27.11.2017 EP 17203874
(43) Veröffentlichungstag der Anmeldung: 07.10.2020
(73) Patentinhaber: Westlake Vinnolit GmbH & Co. KG, 85737 Ismaning (DE)
(72) Erfinder: HABERL, Georg, 84489 Burghausen (DE)
(74) Vertreter: Forstmeyer, Dietmar
(86) Internationale Anmeldenummer: PCT/EP2018/082584
(87) Internationale Veröffentlichungsnummer: WO 2019/102004

(56) Entgegenhaltungen:
- DE-A1- 10 121 580
- JP-A- 2000 230 099
- US-A1- 2011 275 747
- DIETER HEPP: "Pigmented and transparent, highly impact-resistant PVC for outdoor use", DIE ANGEWANDTE MAKROMOLEKULARE CHEMIE, Bd. 158/159, 1. Januar 1988 (1988-01-01), Seiten 87-106, XP055477679, DOI: https://doi.org/10.1002/apmc.1988.05158010 4

## Beschreibung

Die vorliegende Erfindung betrifft die Verwendung von Vinylchlorid-Pfropfcopolymerisaten zur Herstellung eines Farbmasterbatches sowie ein Farbmasterbatch auf Basis von Vinylchlorid-Pfropfcopolymerisaten.

Unter dem Begriff Farbmasterbatch versteht man Kunststoffadditive in Form von Granulaten mit Gehalten an Farbmitteln, die höher sind als in der Endanwendung. Sie werden dem Rohpolymer zum Einfärben beigemischt.

Zum Einfärben von Hart-PVC (PVC-U) und Weich-PVC (PVC-P) werden neben flüssigen Systemen auch Wachse als Träger für die Pigmente eingesetzt. Farbmasterbatches basierend auf PVC-P bzw. Universalträger (beispielsweise mit einem EVA-Träger) sind ebenfalls weit verbreitet. In der JP 2000 230099 A ist ein Farbmasterbatch beschrieben, welches ein Pigment und ein Gleitmittel auf Basis von Acrylaten (Acrylpolymer-Schmiermittel) und gegebenenfalls ein PVC-Harz enthält. Dieses Masterbatch wird unter anderem zum Einfärben von Vinylchlorid-Pfropfcopolymeren verwendet. In den in Tabelle 2 der JP 2000 230099 A beschriebenen Beispielen 1 bis 5 wird ein Masterbatch aus 80 Teilen Pigmenten, 20 bzw. 50 Teilen METABLEN L-1000 und optional 50 Teilen eines Vinylchlorid Harzes hergestellt. Anschließend werden 1 bis 1,5 Teile dieses Masterbatches zum Einfärben von 100 Teilen der in Tabelle 1 der JP 2000 230099 A beschriebenen Vinylchlorid-Pfropfcopolymeren verwendet.

Im Gegensatz zu vielen anderen Kunststoffen reagiert PVC sensibel gegenüber Additiven, die das Verarbeitungsverhalten beeinflussen. PVC Rezepturen enthalten Stabilisatoren, Außen- und Innengleitmittel, Verarbeitungshilfen und, je nach Anwendungsgebiet, Füllstoffe, Antioxidantien, UV-Absorber, Co-Stabilisatoren und Pigmente. Die für die ausgewählte Verarbeitungstechnolgie und das gewünschte Einsatzgebiet optimierte Rezeptur kann durch ein ungeeignetes Farbmasterbatch empfindlich gestört werden.

Bei den derzeit auf dem Markt befindlichen Farbmasterbatches werden Trägerstoffe eingesetzt, die sowohl die Verarbeitung als auch die Endeigenschaften des eingefärbten Artikels negativ beeinflussen könnten. Dabei können beispielsweise die folgenden Nachteile auftreten: Verschiebung der Rheologie durch Gleitwirkung, Migration (bei PVC-P), Glanzreduzierung, Reduzierung der mechanischen Werte, Reduzierung der Vicat-Erweichungstemperatur, Plate-out, Ausschwitzerscheinungen (Blooming), Trübung, Stippen durch ungenügende Dispergierung sowie Gelierverzögerung.

Aufgabe der vorliegenden Erfindung war es daher, ein Farbmasterbatch bereitzustellen, welches die Nachteile des Stands der Technik überwindet.

Es wurde nunmehr überraschenderweise gefunden, dass sich vernetzte Vinylchlorid-Pfropfcopolymerisate, welche als thermoplastische Elastomere aus der EP 0 647 663 A1 bekannt sind, hervorragend als Träger für Farbmasterbatches eignen.

Gegenstand der Erfindung ist die Verwendung der in der EP 0 647 663 A1 beschriebenen Vinylchlorid-Pfropfcopolymerisate als Träger für Farbmasterbatches, die insbesondere zum Einfärben von PVC-U und PVC-P geeignet sind. Auf die in der EP 0 647 663 A1 offenbarten Vinylchlorid-Pfropfcopolymerisate und auf deren Herstellung wird ausdrücklich Bezug genommen.

Die vorliegende Erfindung betrifft die Verwendung von Vinylchlorid-Pfropfcopolymerisaten enthaltend:
A) 35 bis 60 Gew.-%, bezogen auf das Gesamtgewicht des Vinylchlorid-Pfropfcopolymerisats, eines aufgepfropften, vernetzten Copolymers, herstellbar durch Copolymerisation von:
   80 bis 99.95 Gew.-% Vinylchlorid,
   0.05 bis 3.0 Gew.-% mehrfach ethylenisch ungesättigten Comonomeren sowie
   0 bis 19.95 Gew.-% weiteren copolymerisierbaren, ethylenisch ungesättigten Comonomeren,
   oder
   35 bis 60 Gew.-%, bezogen auf das Gesamtgewicht des Vinylchlorid-Pfropfcopolymerisats, eines aufgepfropften (Co)polymers, herstellbar durch (Co)polymerisation von
   80 bis 100 Gew.-% Vinylchlorid sowie
   0 bis 20 Gew.-% weiteren copolymerisierbaren, ethylenisch ungesättigten Comonomeren, bei einer Polymerisationstemperatur von 0 bis 45°C,
   und
B) 40 bis 65 Gew.-%, bezogen auf das Gesamtgewicht des Vinylchlorid-Propfcopolymerisats, einer vernetzten Pfropfgrundlage enthaltend
   ein vernetztes Acrylsäureester-Copolymerisat mit 0.01 bis 5 Gew.-% mehrfach ethylenisch ungesättigten Comonomer-Einheiten sowie gegebenenfalls weiteren mit Acrylsäureestern copolymerisierbaren Comonomer-Einheiten,
   zur Herstellung eines Farbmasterbatches.

Vorzugsweise enthält das Vinylchlorid-Pfropfcopolymerisat 40 bis 55 Gew.-% des aufgepfropften, vernetzten Copolymers A) oder des aufgepfropften, unvernetzten (Co)polymers A) und 45 bis 60 Gew.-% der vernetzten Pfropfgrundlage B).

Zur Vernetzung des aufgepfropften Vinylchlorid-Copolymers A) geeignete, mehrfach ethylenisch ungesättigte Comonomere sind solche, welche keine konjugierten Doppelbindungen aufweisen, beispielsweise Divinylester von Dicarbonsäuren wie Divinyladipat; Diallylester von Polycarbonsäuren wie Diallylphthalat, Diallylfumarat; Divinylether von mehrwertigen Alkoholen wie Ethylenglykoldivinylether; Divinylaromaten wie Divinylbenzol; Allyl- und Methallylester von ethylenisch ungesättigten Monocarbonsäuren wie Allylmethacrylat; Di- und Triacrylate von mehrwertigen Alkoholen wie Ethylenglykoldimethacrylat, Propylenglykoldimethacrylat, Diethylenglykoldiacrylat (DEGDA), Diethylenglykoldimethacrylat (DEGDMA), Trimethylenglykoldiacrylat, Butylenglykoldiacrylat, Pentamethylenglykoldiacrylat, Glyceryltriacrylat, Trimethylolpropantriacrylat (TMPTA), Trimethyolpropantrimethacrylat (TMPTMA); Tetraacrylate mehrwertiger Alkohole wie Pentaerythrittetraacrylat und Triallylcyanurat.

Bevorzugt werden Diallylphthalat, Divinyladipat, Triallylcyanurat, Allylmethacrylat, Ethylenglykoldimethacrylat, Butylenglykoldiacrylat, Trimethylenglykoldiacrylat und Trimethyolpropantriacrylat oder deren Gemische. Vorzugsweise beträgt die Menge an copolymerisiertem Vernetzer 0,1 bis 1,5 Gew.-%, bezogen auf das Gesamtgewicht des aufgepfropften Copolymers A).

Neben Vinylchlorid und gegebenenfalls mehrfach ethylenisch ungesättigten Comonomeren kann das aufgepfropfte Copolymer A) noch ein oder mehrere weitere copolymerisierte, ethylenisch ungesättigte Comonomere enthalten. Beispiele hierfür sind Vinylester von gesättigten Carbonsäuren mit 2 bis 12 C-Atomen wie Vinylacetat, Vinylpropionat, Vinyllaurat oder Versaticsäurevinylester; (Meth)acrylsäureester von Alkoholen mit 1 bis 8 C-Atomen, wie Methylacrylat, Methylmethacrylat, n-Butylacrylat, n-Butylmethacrylat, t-Butylacrylat, 2-Ethylhexylacrylat; ethylenisch ungesättigte Mono- und Dicarbonsäuren wie Acrylsäure, Methacrylsäure, Maleinsäure, Fumarsäure; Mono- und Diester von ethylenisch ungesättigten Dicarbonsäuren wie Diisopropylfumarat; Vinylaromaten wie Styrol; sowie Olefine wie Ethylen.

Der Gehalt an solchen Comonomeren sollte für den Fall, dass Monomere copolymerisiert werden, deren Homopolymerisate eine Glasübergangstemperatur T_{g} < 20°C besitzen, nicht mehr als 5 Gew.-% betragen, bezogen auf das Gesamtgewicht des Copolymers A). Für den Fall, dass Monomere copolymerisiert werden, deren Homopolymerisate eine Glasübergangstemperatur T_{g} ≥ 20°C besitzen, kann deren Anteil bis 20 Gew.-% betragen, bezogen auf das Gesamtgewicht des Copolymers A).

Enthält das aufgepfropfte Copolymer A) keine vernetzend wirkenden Comonomereinheiten, so ist es bevorzugt, dass die Pfropfung bei einer Polymerisationstemperatur erfolgt, die bei der Homopolymerisation von Vinylchlorid zu VC-Polymerisaten mit einem K-Wert ≥ 78 (DIN 53726) führt. Dies entspricht einer Polymerisationstemperatur von 0 bis 45°C (zum Zusammenhang zwischen der Polymerisationstemperatur und dem Molekulargewicht des Polymers siehe auch: PVC Handbook, C.E. Wilkes, J.W. Summers, C.A. Daniels (Eds.), Seite 59, ISBN 3-446-22714-8).

Die bei der vorliegenden Erfindung verwendete Pfropfgrundlage enthält ein vernetztes Acrylsäureester-Copolymerisat mit 0.01 bis 5 Gew.-% mehrfach ethylenisch ungesättigten Comonomer-Einheiten sowie gegebenenfalls weiteren copolymerisierbaren Comonomer-Einheiten oder Gemische solcher Copolymerisate.

Geeignete Acrylsäureester-Copolymerisate sind solche aus einem oder mehreren Acrylsäureestern von Alkoholen mit 1 bis 12 C-Atomen, wie beispielsweise Methylacrylat, Ethylacrylat, Propylacrylat, n-Butylacrylat, 2-Ethylhexylacrylat.

Der Ausdruck "mehrfach ethylenisch ungesättigte Comonomer-Einheiten" bezieht sich vorzugsweise auf Struktureinheiten, die durch Umsetzung von den entsprechenden mehrfach ethylenisch ungesättigten Comonomeren erhalten werden. Der Ausdruck "mit Acrylsäureestern copolymerisierbare Comonomer- Einheiten" bezieht sich vorzugsweise auf Struktureinheiten, die durch Umsetzung von den entsprechenden mit Acrylsäureestern copolymerisierbaren Comonomeren erhalten werden.

Geeignete, mehrfach ethylenisch ungesättigte Comonomer-Einheiten können auf den bereits weiter oben genannten Comonomeren basieren bzw. aus diesen hergestellt werden. Vorzugsweise enthält die vernetzte Acrylat-Pfropfgrundlage 0.05 bis 0.5 Gew%, bezogen auf das Gesamtgewicht der Pfropfgrundlage, copolymerisiertes Diallylphthalat, Divinyladipat, Triallylcyanurat, Allylmethacrylat, Ethylenglykoldimethacrylat, Butylenglykoldiacrylat, Trimethylenglykoldiacrylat, Trimethyolpropantriacrylat oder deren Gemische.

Beispiele für weitere copolymerisierbare, ethylenisch ungesättigte Comonomere sind Vinylester von gesättigten Carbonsäuren mit 2 bis 12 C-Atomen wie Vinylacetat, Vinylpropionat, Vinyllaurat oder Versaticsäurevinylester; Methacrylsäureester von Alkoholen mit 1 bis 8 C-Atomen, wie Methylmethacrylat, n-Butylmethacrylat; ethylenisch ungesättigte Mono- und Dicarbonsäuren wie Acrylsäure, Methacrylsäure, Maleinsäure, Fumarsäure; Mono- und Diester von ethylenisch ungesättigten Dicarbonsäuren wie Diisopropylfumarat; Vinylaromaten wie Styrol; Olefine wie Ethylen; Sulfonate wie Vinylsulfonat, 2-Acrylamido-2-methylpropansulfonat.

Bevorzugt sind vernetzte Acrylsäureester-Copolymerisate aus n-Butylacrylat und/oder 2-Ethylhexylacrylat. Als Pfropfgrundlage B) bevorzugt sind auch vernetzte Acrylsäurester-Ethylen-Vinylester-Copolymerisate mit einem Acrylsäureester-Gehalt von 35 bis 70 Gew.-%, einem Ethylen-Gehalt von 10 bis 30 Gew.-% und Vinylester-Gehalt von 20 bis 50 Gew.-%, bezogen auf das Gesamtgewicht des Copolymerisats B), insbesonders vernetzte Copolymerisate enthaltend n-Butylacrylat-, Ethylen- und Vinylacetat-Einheiten. Gegebenenfalls können auch Gemische der genannten Acrylsäureester-Copolymerisate enthalten sein.

Besonders bevorzugt werden gemäß der vorliegenden Erfindung Vinylchlorid-Pfropfcopolymerisate verwendet, enthaltend:
A) 40 bis 55 Gew.-%, bezogen auf das Gesamtgewicht des Pfropfcopolymerisats, eines aufgepfropften, vernetzten Copolymers aus
   98.5 bis 99.9 Gew.-% Vinylchlorid sowie
   0.1 bis 1.5 Gew.-% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,
      oder
   40 bis 55 Gew.-%, bezogen auf das Gesamtgewicht des Vinylchlorid-Pfropfcopolymerisats, eines aufgepfropften VC-Polymers, herstellbar durch Pfropfpolymerisation von Vinylchlorid bei einer Polymerisationstemperatur von 0 bis 45°C, und
B) 45 bis 60 Gew.-%, bezogen auf das Gesamtgewicht des Pfropfcopolymerisats, einer vernetzten Pfropfgrundlage bestehend aus einem vernetzten Copolymerisat von n-Butylacrylat und/oder 2-Ethylhexylacrylat, oder aus einem vernetzten Acrylsäureester-Ethylen-Vinylacetat-Copolymerisat mit einem Acrylat-Gehalt von 35 bis 70 Gew.-% oder Gemischen der genannten Copolymerisate, wobei die Copolymerisate mit 0.05 bis 0.5 Gew.-% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind.

Die Herstellung der als Träger zu verwendenden Vinylchlorid-Pfropfcopolymerisate ist in der EP 0 647 663 A1 ausführlich beschrieben.

Weiterhin betrifft die vorliegende Erfindung ein Farbmasterbatch, das den oben beschriebenen Träger und ein Pigment, und gegebenenfalls weitere Additive umfasst.

Als weitere Additive können z.B. Nanofüllstoffe, Stabilisatoren, Antistatika, Flammschutzmittel, Haftvermittler, Nukleierungsmittel, Treibmittel, antibakterielle Mittel und Mischungen hiervon enthalten sein. Die Menge der Additive beträgt dabei bevorzugt 1 bis 80 Gew.-%, bezogen auf das Gewicht des gebildeten Vinylchlorid-Pfropfcopolymerisats.

Vorzugsweise enthält das erfindungsgemäße Farbmaserbatch kein Gleitmittel auf Basis von Acrylaten (Acrylpolymer-Schmiermittel) wie beispielsweise METABLEN L-1000 von Mitsubishi Rayon Co.

Zur erfindungsgemäßen Verwendung als Träger für ein Farbmasterbatch wird das vernetzte Vinylchlorid-Pfropfcopolymerisat mit mindestens einem organischen oder anorganischen Pigment gemischt. Das Mischen erfolgt beispielsweise auf in der PVC-Industrie üblichen Schnellmischern, vorzugsweise im Gewichtsverhältnis von 80:20 bis 20:80; besonders bevorzugt von 75:25 bis 25:75.

Die so hergestellte Mischung kann dann auf üblichen Anlagen granuliert und so zu einem staubfreien, gut handhabbaren Farbmasterbatch verarbeitet werden. Die Größe der Granulatkörner kann dabei variieren.

Als Pigmente kommen sowohl anorganische als auch organische Pigmente in Frage. Zu den anorganischen Pigmenten gehören solche der Gruppe der Oxide, z.B. Eisenoxid (braun, rot, schwarz), Chromoxid (grün), Titandioxid, oder Kohlenstoff, z.B. Ruß-schwarz, oder Chromate, z.B. Bleichromat-gelb, Molybdatorange, oder Komplexe anorganischer Buntpigmente, z.B. Chromtitangelb, Chromeisenbraun, Kobaltblau, Nickeltitangelb, Zinkeisenbraun, Wismutvanadatgelb, oder Sulfide, z.B. Cadmiumsulfid (gelb, orange, rot), Cersulfid (gelb, orange, rot), Ultramarin (violett, blau), Zinksulfid (weiß). Zu den organischen Pigmenten zählen Azopigmente, z.B. verlackte Azopigmente (gelb, rot), Disazopigmente (gelb, orange, rot), Disazokondensationspigmente (gelb, rot), Benzimidazolpigmente (gelb, orange), Metallkomplexpigmente (gelb), Insoindolinpigmente (gelb), Insoindolinonpigmente (gelb), oder auch polyzyklische Pigmente, z.B. Chinacridon (violett, blau), Chinophthalon (gelb), Diketo-Pyrrolo-Pyrrol (orange, rot, violett), Disoxazinpigmente (violett), Indanthron (blau), Perylen (rot, violet), Phthalocyanin (blau, grün). Als Farbstoffe kommen sowohl lösliche Farbstoffe, z.B. Anthrachinon, Chinophthalon, Pyrazolon, Perinon und Monoazofarbstoffe, als auch fluoreszierende Farbstoffe, z.B. Perylen, Naphthalimid, Cuminderivate, Thioindigo, Thioxanthen-Benzanthron in Frage.

Das erfindungsgemäße Farbmasterbatch enthält Träger und Pigment vorzugsweise im Gewichtsverhältnis von 80:20 bis 20:80; besonders bevorzugt von 75:25 bis 25:75.

Die zur Stabilisierung von PVC gebräuchlichen (Wärme und Licht) - Stabilisatoren (Ca/Zn. Ba/Zn, Sn, organische Stabilisatoren) werden, wie dem Fachmann bekannt, im Mischer vorgelegt und die Gesamtmischung durch Friktion auf Temperatur (bis max. 150°C) gebracht. Die Stabilisatoren werden in üblichen Mengen von vorzugsweise 1,0 bis 5,0 Gew.-%, bezogen auf das Vinylchlorid-Polymerisat (VC-Polymerisat), zugegeben.

Falls erforderlich, können die VC-Polymerisate noch Füllstoffe, beispielsweise Kreide, Quarzmehl, Talkum, oder weitere Pigmente wie beispielsweise Titandioxid oder Ruß, enthalten. Diese Füllstoffe und/oder weiteren Pigmente werden vorzugsweise in Mengen von 5 bis 100 Gew.-%, bezogen auf das VC-Polymerisat, eingesetzt.

Zur Verbesserung der Schmelzrheologie können den PVC-Massen gegebenenfalls noch interne Gleitmittel, vorzugsweise in Mengen von 0,1 bis 1,0 Gew.-%, bezogen auf das VC-Polymerisat, zugegeben werden. Beispiele hierfür sind Fettsäurepartialester des Glycerins wie Glycerinmonooleat oder Phthalsäureester von Fettalkoholen wie Distearylphthalat.

Das erfindungsgemäße Farbmasterbatch kann auch in weichmacherhaltigen Weich-PVC-Rezepturen verwendet werden. Geeignete Weichmacher sind beispielsweise Phthalsäureester wie Dioctylphthalat, Adipinsäureester wie Di-2-Ethylhexyl- Adipat oder Phosphorsäureester wie Diphenyl-2-Ethylhexylphosphat, oder weichmachende Polymere wie Ethylen-Vinylacetat-Copolymere, Ethylen-Vinylacetat-Kohlenmonoxid-Terpolymere und thermoplastisches Polyurethan.

Bevorzugt ist die Verwendung des erfindungsgemäßen Farbmasterbatches in weichmacherfreien Hart-PVC-Rezepturen. Zur Verbesserung der Schmelzrheologie können diese gegebenenfalls noch polymere Verarbeitungshilfen wie beispielsweise Copolymerisate von Methylmethacrylat mit Styrol oder Butylacrylat, vorzugsweise in Mengen von 0,5 bis 5 Gew.-%, bezogen auf den PVC-Anteil, oder auch interne Gleitmittel in den oben genannten Mengen enthalten.

### Beispiele

Es wurden die folgenden Farbmasterbatches hergestellt:
Extruder: Weber DS 85 16 D, S-Schnecke
Temperaturen: Zylinder Zone 1 150°C,
   Zylinder Zone 2 160°C
   Zylinder Zone 3 170°C
   Zylinder Zone 4 170°C
   Zylinder Zone 5 175°C
   Zylinder Zone 6 175°C
Schnecken - Drehzahl 30 U/min; Drehzahl Dosierschnecke 4 U/min
Als Werkzeug wurde ein Granulierkopf verwendet.

**Tabelle 1:**

| ***Inhaltsstoff*** | ***Beispiel 1*** | ***Beispiel 2*** |
|---|---|---|
| ***Handelsname* - *Handelstyp*** | ***HA 3350*/*6*** | ***HA 3350*/*7*** |
| K 707 E (Vinnolit) | 30,0000 | 70,0000 |
| Heucodur Brown 869 | 70,0000 | - |
| Heucodur Yellow 3975 | - | 30,0000 |
| Mark CZ 2001/1 (Ca/Zn Stabilisator) | 1,2500 | 1,2500 |
| Edenol D 81 (Epoxidiertes Sojabohnenöl) | 1,5000 | 1,5000 |
| Paraloid K 120 N (Acrylische Verarbeitungshilfe) | 1,0000 | 1,0000 |
| Loxiol G 70 (Gleitmittel) | 0,2500 | 0,2500 |

| | | |
|---|---|---|
| Erfindungsgemäßer Träger: K 707 E; Pigmente: Heucodur Brown 869 und Heucodur Yellow 3975; Stabilisatoren: Mark CZ 2001/1 und Edenol D 81; Verarbeitungshilfsmittel Paraloid K 120 N; Gleitmittel: Loxiol G 70. | | |

Mit diesen erfindungsgemäßen Farbmasterbatches wurden Fensterprofile hergestellt. Die Zusammensetzungen sind in Tabelle 2 gezeigt:
Extruder: Cincinnati CMT-45, Schnecke konisch gegenläufig
Temperaturen: Schnecke 155 - 160°C
   Zylinder Zone 1 165°C
   Zylinder Zone 2 170°C
   Zylinder Zone 3 180°C
   Zylinder Zone 4 195°C
   Werkzeug 206°C
Schnecken - Drehzahl 22 U/min
Fensterprofil - Werkzeug

**Tabelle 2:**

| | **Referenz-Bsp (ohne Pigment)** | **Bsp. 3** | **Bsp. 4** | **Bsp. 5** | **Bsp. 6** | **Vgl.-Bsp. 1** | **Vgl.-Bsp. 2** | **Vgl.-Bsp. 3** | **Vgl.-Bsp. 4** |
|---|---|---|---|---|---|---|---|---|---|
| ***Inhaltsstoff*** | | | | | | | | | |
| Vinnolit S 3268 S-PVC | 95 | 95 | 95 | 95 | 95 | 95 | 95 | 95 | 95 |
| Vinnolit K 707 E Pfropfcopolymer | 10 | 10 | 10 | 10 | 10 | 10 | 10 | 10 | 10 |
| Bäropan R 90901 Stabilisator | 3,6 | 3,6 | 3,6 | 3,6 | 3,6 | 3,6 | 3,6 | 3,6 | 3,6 |
| Kronos 2220 Titandioxyd | 4 | ohne | ohne | ohne | ohne | ohne | ohne | ohne | ohne |
| Hydrocarb 95T Kreide | 8 | 8 | 8 | 8 | 8 | 8 | 8 | 8 | 8 |
| Gelb-HA 3350/7 | | 4 | 6 | | | | | | |
| Braun-HA 3350/6 | | | | 4 | 6 | | | | |
| Heucobatch Yellow 190 07 99 | | | | | | 4 | 6 | | |
| Heucobatch Brown 890 103 | | | | | | | | 4 | 6 |

| Prüfmethode | | | | | | | | | |
|---|---|---|---|---|---|---|---|---|---|
| Schlagzähigkeit (DIN ISO 179-1, 23°C) | 24,38 | 100,79 | 102,04 | 23,8 | 101,81 | 18,33 | 17,28 | 24,03 | 18,33 |
| Glanz (DIN ISO 67530, 60 °C) | 50,9 | 47.4 | 50,6 | 49,3 | 50,8 | 35,2 | 35,2 | 34,7 | 34,2 |
| Schlagzähigkeit (RAL 716-1, 23 °C) | 53,0 | 54,0 | 55,2 | 52,0 | 52,7 | 36,8 | 25,1 | 48,9 | 48,9 |
| Vicat A (DIN EN ISO 306) Mittelwert °C | 89,0 | 89,1 | 88,6 | 88,5 | 88,6 | 88,0 | 87,5 | 86,5 | 87,5 |

Durch Einsatz der erfindungsgemäß hergestellten Farbmasterbatches (Beispiel 3, 4, 5, 6) bleibt die Schlagzähigkeit auf einem hohen Niveau bzw. wird weiter verbessert.

Der in vielen Fällen gewünschte hohe Glanz der Extrudate bleibt im Gegensatz zu den Vergleichsbeispielen (Vgl. Bsp, 1, 2, 3, 4) erhalten.

Besonders bei pigmentierten Artikeln für die Außenverwendung wird eine möglichst hohe Vicat-Erweichungstemperatur angestrebt. Der Einsatz der erfindungsgemäß hergestellten Farbmasterbatches erwies sich hier als vorteilhaft.

## Patentansprüche

1. Verwendung eines Vinylchlorid-Pfropfcopolymerisats enthaltend:
A) 35 bis 60 Gew.-%, bezogen auf das Gesamtgewicht des Vinylchlorid-Pfropfcopolymerisats, eines aufgepfropften, vernetzten Copolymers, herstellbar durch Copolymerisation von:
80 bis 99.95 Gew.-% Vinylchlorid,
0.05 bis 3.0 Gew.-% mehrfach ethylenisch ungesättigten Comonomeren sowie
0 bis 19.95 Gew.-% weiteren copolymerisierbaren, ethylenisch ungesättigten Comonomeren,
oder
35 bis 60 Gew.-%, bezogen auf das Gesamtgewicht des Vinylchlorid-Pfropfcopolymerisats, eines aufgepfropften (Co)polymers, herstellbar durch (Co)polymerisation von
80 bis 100 Gew.-% Vinylchlorid sowie
0 bis 20 Gew.-% weiteren copolymerisierbaren, ethylenisch ungesättigten Comonomeren, bei einer Polymerisationstemperatur von 0 bis 45°C,
und
B) 40 bis 65 Gew.-%, bezogen auf das Gesamtgewicht des Vinylchlorid-Propfcopolymerisats, einer vernetzten Pfropfgrundlage enthaltend
ein vernetztes Acrylsäureester-Copolymerisat mit 0.01 bis 5 Gew.-% mehrfach ethylenisch ungesättigten Comonomer-Einheiten sowie gegebenenfalls weiteren mit Acrylsäureestern copolymerisierbaren Comonomer-Einheiten,
zur Herstellung eines Farbmasterbatches.

2. Verwendung nach Anspruch 1, wobei die mehrfach ethylenisch ungesättigten Comonomere keine konjugierten Doppelbindungen aufweisen, wie beispielsweise Divinylester von Dicarbonsäuren wie Divinyladipat; Diallylester von Polycarbonsäuren wie Diallylphthalat, Diallylfumarat; Divinylether von mehrwertigen Alkoholen wie Ethylenglykoldivinylether; Divinylaromaten wie Divinylbenzol; Allyl- und Methallylester von ethylenisch ungesättigten Monocarbonsäuren wie Allylmethacrylat; Di- und Triacrylate von mehrwertigen Alkoholen wie Ethylenglykoldimethacrylat, Propylenglykoldimethacrylat, Diethylenglykoldiacrylat (DEGDA), Diethylenglykoldimethacrylat (DEGDMA), Trimethylenglykoldiacrylat, Butylenglykoldiacrylat, Pentamethylenglykoldiacrylat, Glyceryltriacrylat, Trimethylolpropantriacrylat (TMPTA), Trimethyolpropantrimethacrylat (TMPTMA); Tetraacrylate mehrwertiger Alkohole wie Pentaerythrittetraacrylat; Triallylcyanurat.

3. Verwendung nach Anspruch 1, wobei die mehrfach ethylenisch ungesättigten Comonomere ausgewählt werden aus Diallylphthalat, Divinyladipat, Triallylcyanurat, Allylmethacrylat, Ethylenglykoldimethacrylat, Butylenglykoldiacrylat, Trimethylenglykoldiacrylat und Trimethyolpropantriacrylat oder deren Gemische.

4. Verwendung nach einem der vorhergehenden Ansprüche, wobei die weiteren copolymerisierbaren, ethylenisch ungesättigten Comonomere ausgewählt werden aus: Vinylestern von gesättigten Carbonsäuren mit 2 bis 12 C-Atomen wie Vinylacetat, Vinylpropionat, Vinyllaurat oder Versaticsäurevinylester; (Meth)acrylsäureestern von Alkoholen mit 1 bis 8 C-Atomen, wie Methylacrylat, Methylmethacrylat, n-Butylacrylat, n-Butylmethacrylat, t-Butylacrylat, 2-Ethylhexylacrylat; ethylenisch ungesättigten Mono- und Dicarbonsäuren wie Acrylsäure, Methacrylsäure, Maleinsäure, Fumarsäure; Mono- und Diestern von ethylenisch ungesättigten Dicarbonsäuren wie Diisopropylfumarat; Vinylaromaten wie Styrol; und Olefinen wie Ethylen.

5. Verwendung nach einem der vorhergehenden Ansprüche, wobei das vernetzte Acrylsäureester-Copolymerisat aus einem oder mehreren Acrylsäureestern von Alkoholen mit 1 bis 12 C-Atomen, wie beispielsweise Methylacrylat, Ethylacrylat, Propylacrylat, n-Butylacrylat, 2-Ethylhexylacrylat hergestellt wurde.

6. Verwendung des Vinylchlorid-Pfropfcopolymerisats nach Anspruch 1, enthaltend:
A) 40 bis 55 Gew.-%, bezogen auf das Gesamtgewicht des Pfropfcopolymerisats, eines aufgepfropften, vernetzten Copolymers aus
98.5 bis 99.9 Gew.-% Vinylchlorid sowie
0.1 bis 1.5 Gew.-% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,
oder
40 bis 55 Gew.-%, bezogen auf das Gesamtgewicht des Vinylchlorid-Pfropfcopolymerisats, eines aufgepfropften VC-Polymers, herstellbar durch Pfropfpolymerisation von Vinylchlorid bei einer Polymerisationstemperatur von 0 bis 45°C, und
B) 45 bis 60 Gew.-%, bezogen auf das Gesamtgewicht des Pfropfcopolymerisats, einer vernetzten Pfropfgrundlage bestehend aus einem vernetzten Copolymerisat von n-Butylacrylat und/oder 2-Ethylhexylacrylat, oder aus einem vernetzten Acrylsäureester-Ethylen-Vinylacetat-Copolymerisat mit einem Acrylat-Gehalt von 35 bis 70 Gew.-% oder Gemischen der genannten Copolymerisate, wobei die Copolymerisate mit 0.05 bis 0.5 Gew.-% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind,
zur Herstellung eines Farbmasterbatches.

7. Farbmasterbatch umfassend:
ein Vinylchlorid-Pfropfcopolymerisat enthaltend:
A) 35 bis 60 Gew.-%, bezogen auf das Gesamtgewicht des Vinylchlorid-Pfropfcopolymerisats, eines aufgepfropften, vernetzten Copolymers, herstellbar durch Copolymerisation von:
80 bis 99.95 Gew.-% Vinylchlorid,
0.05 bis 3.0 Gew.-% mehrfach ethylenisch ungesättigten Comonomeren sowie
0 bis 19.95 Gew.-% weiteren copolymerisierbaren, ethylenisch ungesättigten Comonomeren,
oder
35 bis 60 Gew.-%, bezogen auf das Gesamtgewicht des Vinylchlorid-Pfropfcopolymerisats, eines aufgepfropften (Co)polymers, herstellbar durch (Co)polymerisation von
80 bis 100 Gew.-% Vinylchlorid sowie
0 bis 20 Gew.-% weiteren copolymerisierbaren, ethylenisch ungesättigten Comonomeren, bei einer Polymerisationstemperatur von 0 bis 45°C,
und
B) 40 bis 65 Gew.-%, bezogen auf das Gesamtgewicht des Vinylchlorid-Propfcopolymerisats, einer vernetzten Pfropfgrundlage enthaltend
ein vernetztes Acrylsäureester-Copolymerisat mit 0.01 bis 5 Gew.-% mehrfach ethylenisch ungesättigten Comonomer-Einheiten sowie gegebenenfalls weiteren mit Acrylsäureestern copolymerisierbaren Comonomeren,
und mindestens ein Pigment.

8. Farbmasterbatch nach Anspruch 7 umfassend:
ein Vinylchlorid-Pfropfcopolymerisat enthaltend:
A) 40 bis 55 Gew.-%, bezogen auf das Gesamtgewicht des Pfropfcopolymerisats, eines aufgepfropften, vernetzten Copolymers aus
98.5 bis 99.9 Gew.-% Vinylchlorid sowie
0.1 bis 1.5 Gew.-% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,
oder
40 bis 55 Gew.-%, bezogen auf das Gesamtgewicht des Vinylchlorid-Pfropfcopolymerisats, eines aufgepfropften VC-Polymers, herstellbar durch Pfropfpolymerisation von Vinylchlorid bei einer Polymerisationstemperatur von 0 bis 45°C, und
B) 45 bis 60 Gew.-%, bezogen auf das Gesamtgewicht des Pfropfcopolymerisats, einer vernetzten Pfropfgrundlage bestehend aus einem vernetzten Copolymerisat von n-Butylacrylat und/oder 2-Ethylhexylacrylat, oder aus einem vernetzten Acrylsäureester-Ethylen-Vinylacetat-Copolymerisat mit einem Acrylat-Gehalt von 35 bis 70 Gew.-% oder Gemischen der genannten Copolymerisate, wobei die Copolymerisate mit 0.05 bis 0.5 Gew.-% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind,
und mindestens ein Pigment.

9. Verwendung nach einem der Ansprüche 1 bis 6 zur Herstellung eines Farbmasterbatches, das Vinylchlorid-Pfropfcopolymerisat und Pigment im Gewichtsverhältnis von 80:20 bis 20:80 enthält.

10. Verwendung nach einem der Ansprüche 1 bis 6 zur Herstellung eines Farbmasterbatches, das Vinylchlorid-Pfropfcopolymerisat und Pigment im Gewichtsverhältnis von 75:25 bis 25:75 enthält.

11. Farbmasterbatch nach Anspruch 7 oder 8, **dadurch gekennzeichnet, dass** Vinylchlorid-Pfropfcopolymerisat und Pigment im Gewichtsverhältnis von 80:20 bis 20:80 enthalten sind.

12. Farbmasterbatch nach Anspruch 7 oder 8, **dadurch gekennzeichnet, dass** Vinylchlorid-Pfropfcopolymerisat und Pigment im Gewichtsverhältnis von 75:25 bis 25:75 enthalten sind.

## Claims

1. Use of a vinyl chloride graft copolymer comprising
A) 35 to 60 % by weight, based on the total weight of the vinyl chloride graft copolymer, of a grafted, crosslinked copolymer preparable by copolymerisation of:
80 to 99.95 % by weight vinyl chloride,
0.05 to 3.0 % by weight of polyethylenically unsaturated comonomers and
0 to 19.95 % by weight of other copolymerisable, ethylenically unsaturated comonomers,
or
35 to 60 % by weight, based on the total weight of the vinyl chloride graft copolymer, of a grafted (co)polymer, preparable by (co)polymerisation of
80 to 100 % by weight vinyl chloride and
0 to 20 % by weight of other copolymerisable, ethylenically unsaturated comonomers, at a polymerisation temperature of 0 to 45°C,
and
B) 40 to 65 % by weight, based on the total weight of the vinyl chloride graft copolymer, of a crosslinked grafting base containing
a crosslinked acrylic acid ester copolymer with 0.01 to 5 % by weight of polyethylenically unsaturated comonomer units and optionally further comonomer units copolymerisable with acrylic acid esters, for the production of a colour masterbatch.

2. Use according to claim 1, wherein the polyethylenically unsaturated comonomers have no conjugated double bonds, such as, for example, divinyl esters of dicarboxylic acids such as divinyl adipate; diallyl esters of polycarboxylic acids such as diallyl phthalate, diallyl fumarate; divinyl ethers of polyhydric alcohols such as ethylene glycol divinyl ether; divinyl aromatics such as divinyl benzene; allyl and methallyl esters of ethylenically unsaturated monocarboxylic acids such as allyl methacrylate; Di- and triacrylates of polyhydric alcohols such as ethylene glycol dimethacrylate, propylene glycol dimethacrylate, diethylene glycol diacrylate (DEGDA), diethylene glycol dimethacrylate (DEGDMA), trimethylene glycol diacrylate, butylene glycol diacrylate, pentamethylene glycol diacrylate, glyceryl triacrylate, trimethylolpropane triacrylate (TMPTA), trimethyolpropane trimethacrylate (TMPTMA); tetraacrylates of polyhydric alcohols such as pentaerythritol tetraacrylate; triallylcyanurate.

3. Use according to claim 1, wherein the polyethylenically unsaturated comonomers are selected from diallyl phthalate, divinyl adipate, triallyl cyanurate, allyl methacrylate, ethylene glycol dimethacrylate, butylene glycol diacrylate, trimethylene glycol diacrylate and trimethyol propane triacrylate or mixtures thereof.

4. Use according to one of the preceding claims, wherein the further copolymerisable, ethylenically unsaturated comonomers are selected from: vinyl esters of saturated carboxylic acids having 2 to 12 carbon atoms, such as vinyl acetate, vinyl propionate, vinyl laurate or vinyl versatic acid ester; (meth)acrylic acid esters of alcohols having 1 to 8 carbon atoms, such as methyl acrylate, methyl methacrylate, n-butyl acrylate, n-butyl methacrylate, t-butyl acrylate, 2-ethylhexyl acrylate; ethylenically unsaturated mono- and dicarboxylic acids such as acrylic acid, methacrylic acid, maleic acid, fumaric acid; mono- and diesters of ethylenically unsaturated dicarboxylic acids such as diisopropyl fumarate; vinylaromatics such as styrene; and olefins such as ethylene.

5. Use according to one of the preceding claims, wherein the crosslinked acrylic acid ester copolymer has been prepared from one or more acrylic acid esters of alcohols having 1 to 12 carbon atoms, such as methyl acrylate, ethyl acrylate, propyl acrylate, n-butyl acrylate, 2-ethylhexyl acrylate.

6. Use of the vinyl chloride graft copolymer according to claim 1, containing
A) from 40 to 55 % by weight, based on the total weight of the graft copolymer, of a grafted, crosslinked copolymer of
98.5 to 99.9 % by weight of vinyl chloride and
0.1 to 1.5 % by weight of one or more polyethylenically unsaturated comonomers from the group consisting of diallyl phthalate, allyl methacrylate, ethylene glycol dimethacrylate, butylene glycol diacrylate, trimethylene glycol diacrylate, trimethyol propane triacrylate,
or
40 to 55 % by weight, based on the total weight of the vinyl chloride graft copolymer, of a grafted VC polymer preparable by graft polymerisation of vinyl chloride at a polymerisation temperature of 0 to 45°C, and
B) 45 to 60 % by weight, based on the total weight of the graft copolymer, of a crosslinked graft base consisting of a crosslinked copolymer of n-butyl acrylate and/or 2-ethylhexyl acrylate, or of a crosslinked acrylic acid ester-ethylene vinyl acetate copolymer with an acrylate content of 35 to 70 % by weight, or of mixtures of the said copolymers, the copolymers being crosslinked with 0.05 to 0.5 % by weight of one or more copolymerised, polyethylenically unsaturated comonomers from the group consisting of diallyl phthalate, allyl methacrylate, ethylene glycol dimethacrylate, butylene glycol diacrylate, trimethylene glycol diacrylate and trimethyolpropane triacrylate,
for the production of a colour masterbatch.

7. Colour masterbatch comprising:
a vinyl chloride graft copolymer containing:
A) 35 to 60 % by weight, based on the total weight of the vinyl chloride graft copolymer, of a grafted, crosslinked copolymer preparable by copolymerisation of:
80 to 99.95 % by weight vinyl chloride,
0.05 to 3.0 % by weight of polyethylenically unsaturated comonomers and
0 to 19.95 % by weight of other copolymerisable, ethylenically unsaturated comonomers,
or
35 to 60 % by weight, based on the total weight of the vinyl chloride graft copolymer, of a grafted (co)polymer, preparable by (co)polymerisation of
80 to 100 % by weight vinyl chloride and
0 to 20 % by weight of other copolymerisable, ethylenically unsaturated comonomers, at a polymerisation temperature of 0 to 45°C,
and
B) 40 to 65 % by weight, based on the total weight of the vinyl chloride graft copolymer, of a crosslinked grafting base containing
a crosslinked acrylic acid ester copolymer with 0.01 to 5 % by weight of polyethylenically unsaturated comonomer units and optionally other comonomers copolymerisable with acrylic acid esters,
and at least one pigment.

8. Colour masterbatch according to claim 7 comprising
a vinyl chloride graft copolymer containing:
A) from 40 to 55 % by weight, based on the total weight of the graft copolymer, of a grafted, crosslinked copolymer of
98.5 to 99.9 % by weight vinyl chloride and
0.1 to 1.5 % by weight of one or more polyethylenically unsaturated comonomers from the group consisting of diallyl phthalate, allyl methacrylate, ethylene glycol dimethacrylate, butylene glycol diacrylate, trimethylene glycol diacrylate, trimethyol propane triacrylate,
or
40 to 55 % by weight, based on the total weight of the vinyl chloride graft copolymer, of a grafted VC polymer preparable by graft polymerisation of vinyl chloride at a polymerisation temperature of 0 to 45°C, and
B) 45 to 60 % by weight, based on the total weight of the graft copolymer, of a crosslinked graft base consisting of a crosslinked copolymer of n-butyl acrylate and/or 2-ethylhexyl acrylate, or of a crosslinked acrylic acid ester-ethylene vinyl acetate copolymer with an acrylate content of 35 to 70 % by weight, or of mixtures of the said copolymers, the copolymers being crosslinked with 0.05 to 0.5 % by weight of one or more copolymerised, polyethylenically unsaturated comonomers from the group consisting of diallyl phthalate, allyl methacrylate, ethylene glycol dimethacrylate, butylene glycol diacrylate, trimethylene glycol diacrylate, trimethyol propane triacrylate,
and at least one pigment.

9. Use according to any one of claims 1 to 6 for the preparation of a colour masterbatch comprising vinyl chloride graft copolymer and pigment in a weight ratio of 80:20 to 20:80.

10. Use according to any one of claims 1 to 6 for the preparation of a colour masterbatch comprising vinyl chloride graft copolymer and pigment in a weight ratio of 75:25 to 25:75.

11. Colour masterbatch according to claim 7 or 8, **characterised in that** vinyl chloride graft copolymer and pigment are contained in a weight ratio of 80:20 to 20:80.

12. Colour masterbatch according to claim 7 or 8, **characterised in that** vinyl chloride graft copolymer and pigment are contained in a weight ratio of 75:25 to 25:75.

## Revendications

1. Utilisation d'un copolymère greffé de chlorure de vinyle contenant :
A) 35 à 60 % en poids, par rapport au poids total du copolymère greffé de chlorure de vinyle, d'un copolymère réticulé greffé, pouvant être préparé par copolymérisation de :
80 à 99,95 % en poids de chlorure de vinyle,
0,05 à 3,0 % en poids de comonomères à plusieurs insaturations éthyléniques; ainsi que
0 à 19,95 % en poids d'autres comonomères copolymérisables à insaturation éthylénique, ou
35 à 60 % en poids, par rapport au poids total du copolymère greffé de chlorure de vinyle, d'un (co)polymère greffé, pouvant être préparé par (co)polymérisation de
80 à 100 % en poids de chlorure de vinyle ainsi que
0 à 20 % en poids d'autres comonomères copolymérisables à insaturation éthylénique, à une température de polymérisation de 0 à 45°C,
et
B) 40 à 65 % en poids, par rapport au poids total du copolymère greffé de chlorure de vinyle, d'une base de greffage réticulée contenant
un copolymère d'ester d'acide acrylique réticulé avec 0,01 à 5 % en poids de motifs comonomères à plusieurs insaturations éthyléniques ainsi qu'éventuellement d'autres motifs comonomères copolymérisables avec des esters d'acide acrylique,
pour la fabrication d'un mélange-maître de couleurs.

2. Utilisation selon la revendication 1, dans laquelle les comonomères à plusieurs insaturations éthyléniques ne présentent pas de doubles liaisons conjuguées, comme par exemple les esters divinyliques d'acides dicarboxyliques tels que l'adipate de divinyle; les esters diallyliques d'acides polycarboxyliques tels que le phtalate de diallyle, le fumarate de diallyle; les éthers divinyliques de polyalcools tels que les éthers divinyliques d'éthylèneglycol; les composés aromatiques divinyliques tels que le divinylbenzène; les esters allyliques et méthyliques d'acides monocarboxyliques à insaturation éthylénique tels que le méthacrylate d'allyle; diacrylates et triacrylates de polyalcools tels que le diméthacrylate d'éthylène glycol, le diméthacrylate de propylène glycol, le diacrylate de diéthylène glycol (DEGDA), le diméthacrylate de diéthylène glycol (DEGDMA), le diacrylate de triméthylèneglycol, le diacrylate de butylèneglycol, le diacrylate de pentaméthylèneglycol, le triacrylate de glycéryle, triacrylate de triméthylolpropane (TMPTA), le triméthacrylate de triméthyolpropane (TMPTMA); tétraacrylates de polyalcools tels que le tétraacrylate de pentaérythritol ; cyanurate de triallyle.

3. Utilisation selon la revendication 1, dans laquelle les comonomères à plusieurs insaturations éthylénique sont choisis parmi le phtalate de diallyle, l'adipate de divinyle, le cyanurate de triallyle, le méthacrylate d'allyle, le diméthacrylate d'éthylèneglycol, le diacrylate de butylèneglycol, le diacrylate de triméthylèneglycol et le triacrylate de triméthyolpropane ou leurs mélanges.

4. Utilisation selon l'une des revendications précédentes, dans laquelle les autres comonomères copolymérisables à insaturation éthylénique sont choisis parmi : des esters vinyliques d'acides carboxyliques saturés ayant de 2 à 12 atomes de carbone, tels que l'acétate de vinyle, le propionate de vinyle, le laurate de vinyle ou l'ester vinylique de l'acide versatique ; des esters d'acide (méth)acrylique d'alcools ayant de 1 à 8 atomes de carbone, tels que l'acrylate de méthyle, le méthacrylate de méthyle, l'acrylate de n-butyle, le méthacrylate de n-butyle, l'acrylate de t-butyle, l'acrylate de 2-éthylhexyle ; d'acides mono- et dicarboxyliques éthyléniquement insaturés tels que l'acide acrylique, l'acide méthacrylique, l'acide maléique, l'acide fumarique ; de mono- et diesters d'acides dicarboxyliques éthyléniquement insaturés tels que le fumarate de diisopropyle ; de composés vinylaromatiques tels que le styrène ; et d'oléfines telles que l'éthylène.

5. Utilisation selon l'une des revendications précédentes, dans laquelle le copolymère d'ester d'acide acrylique réticulé a été préparé à partir d'un ou de plusieurs esters d'acide acrylique d'alcools comportant de 1 à 12 atomes de carbone, comme par exemple l'acrylate de méthyle, l'acrylate d'éthyle, l'acrylate de propyle, l'acrylate de n-butyle, l'acrylate de 2-éthylhexyle.

6. Utilisation du copolymère greffé de chlorure de vinyle selon la revendication 1, contenant :
A) 40 à 55 % en poids, par rapport au poids total du copolymère greffé, d'un copolymère réticulé greffé de
98.5 à 99.9% en poids de chlorure de vinyle ainsi que
0,1 à 1,5 % en poids d'un ou de plusieurs comonomères à plusieurs insaturations éthylénique choisis dans le groupe constitué par le phtalate de diallyle, le méthacrylate d'allyle, le diméthacrylate d'éthylèneglycol, le diacrylate de butylèneglycol, le diacrylate de triméthylèneglycol, le triacrylate de triméthyolpropane,
ou
40 à 55 % en poids, par rapport au poids total du copolymère greffé de chlorure de vinyle, d'un polymère VC greffé, pouvant être préparé par polymérisation par greffage de chlorure de vinyle à une température de polymérisation de 0 à 45°C, et
B) 45 à 60 % en poids, par rapport au poids total du copolymère greffé, d'une base de greffage réticulée constituée d'un copolymère réticulé d'acrylate de n-butyle et/ou d'acrylate de 2-éthylhexyle, ou d'un copolymère réticulé d'ester d'acide acrylique-éthylène-acétate de vinyle ayant une teneur en acrylate de 35 à 70 % en poids ou des mélanges des copolymères mentionnés, les copolymères étant réticulés avec 0,05 à 0,5 % en poids d'un ou plusieurs comonomères copolymérisés à plusieurs insaturations éthyléniques, choisis dans le groupe constitué par le phtalate de diallyle, le méthacrylate d'allyle, le diméthacrylate d'éthylèneglycol, le diacrylate de butylèneglycol, le diacrylate de triméthylèneglycol, le triacrylate de triméthyolpropane,
pour la fabrication d'un mélange-maître de couleurs.

7. Mélange maître de couleurs comprenant :
un copolymère greffé de chlorure de vinyle contenant :
A) 35 à 60 % en poids, par rapport au poids total du copolymère greffé de chlorure de vinyle, d'un copolymère réticulé greffé, pouvant être préparé par copolymérisation de :
80 à 99,95 % en poids de chlorure de vinyle,
0,05 à 3,0 % en poids de comonomères à plusieurs insaturations éthylénique, ainsi que
0 à 19,95 % en poids d'autres comonomères à insaturation éthylénique copolymérisables, ou
35 à 60 % en poids, par rapport au poids total du copolymère greffé de chlorure de vinyle, d'un (co)polymère greffé, pouvant être préparé par (co)polymérisation de
80 à 100 % en poids de chlorure de vinyle ainsi que
0 à 20 % en poids d'autres comonomères copolymérisables à insaturation éthylénique, à une température de polymérisation de 0 à 45°C,
et
B) 40 à 65 % en poids, par rapport au poids total du copolymère greffé de chlorure de vinyle, d'une base de greffage réticulée contenant
un copolymère d'ester d'acide acrylique réticulé avec 0,01 à 5 % en poids de motifs comonomères à plusieurs insaturations éthyléniques ainsi qu'éventuellement d'autres comonomères copolymérisables avec des esters d'acide acrylique,
et au moins un pigment.

8. Mélange-maître de couleurs selon la revendication 7, comprenant :
un copolymère greffé de chlorure de vinyle contenant :
A) 40 à 55 % en poids, par rapport au poids total du copolymère greffé, d'un copolymère réticulé greffé de
98,5 à 99,9 % en poids de chlorure de vinyle ainsi que
0,1 à 1,5 % en poids d'un ou de plusieurs comonomères à plusieurs insaturations éthylénique choisis dans le groupe constitué par le phtalate de diallyle, le méthacrylate d'allyle, le diméthacrylate d'éthylèneglycol, le diacrylate de butylèneglycol, le diacrylate de triméthylèneglycol, le triacrylate de triméthyolpropane,
ou
40 à 55 % en poids, par rapport au poids total du copolymère greffé de chlorure de vinyle, d'un polymère VC greffé, pouvant être préparé par polymérisation par greffage de chlorure de vinyle à une température de polymérisation de 0 à 45°C, et
B) 45 à 60 % en poids, par rapport au poids total du copolymère greffé, d'une base de greffage réticulée constituée d'un copolymère réticulé d'acrylate de n-butyle et/ou d'acrylate de 2-éthylhexyle, ou d'un copolymère réticulé d'ester d'acide acrylique-éthylène-acétate de vinyle ayant une teneur en acrylate de 35 à 70 % en poids ou des mélanges des copolymères mentionnés, les copolymères étant réticulés avec 0,05 à 0,5 % en poids d'un ou plusieurs comonomères copolymérisés à plusieurs insaturations éthylénique choisis dans le groupe constitué par le phtalate de diallyle, le méthacrylate d'allyle, le diméthacrylate d'éthylèneglycol, le diacrylate de butylèneglycol, le diacrylate de triméthylèneglycol, le triacrylate de triméthyolpropane,
et au moins un pigment.

9. Utilisation selon l'une quelconque des revendications 1 à 6 pour la préparation d'un mélange-maître de couleur comprenant un copolymère greffé de chlorure de vinyle et un pigment dans un rapport pondéral de 80:20 à 20:80.

10. Utilisation selon l'une quelconque des revendications 1 à 6 pour la préparation d'un mélange-maître de couleur contenant un copolymère greffé de chlorure de vinyle et un pigment dans un rapport pondéral de 75:25 à 25:75.

11. Mélange-maître de couleur selon la revendication 7 ou 8, **caractérisé en ce que** le copolymère greffé de chlorure de vinyle et le pigment sont contenus dans un rapport pondéral de 80:20 à 20:80.

12. Mélange-maître de couleur selon la revendication 7 ou 8, **caractérisé en ce que** le copolymère greffé de chlorure de vinyle et le pigment sont contenus dans un rapport pondéral de 75:25 à 25:75.
